# EUROPÄISCHE PATENTSCHRIFT

(11) **EP 0 992 665 B1**
(45) Veröffentlichungstag und Bekanntmachung des Hinweises auf die Patenterteilung: **07.07.2004**
(21) Anmeldenummer: 99118744.4
(22) Anmeldetag: 23.09.1999
(51) Int. Cl.: F02D 41/34, F02D 41/14, F02D 41/18, F02D 41/28

(54) **Verfahren zur Kompensation des Einflusses unterschiedlicher Luftfüllmengen**
Method for compensating the effect of variations in air filling quantities
Méthode de compensation de l'effet d'écart de quantités d'air de remplissage

(30) Priorität: 05.10.1998 DE 19845749
(43) Veröffentlichungstag der Anmeldung: 12.04.2000
(73) Patentinhaber: Bayerische Motoren Werke Aktiengesellschaft, 80809 München (DE)
(72) Erfinder: Bayerl, Herbert, 85293 Reichertshausen (DE)

(56) Entgegenhaltungen:
- DE-A- 4 122 139
- DE-A- 4 408 880
- US-A- 4 667 634
- US-A- 5 016 591
- US-A- 5 377 654
- US-A- 5 515 828
- US-A- 5 775 299

## Beschreibung

Die Erfindung bezieht sich auf ein Verfahren mit den Merkmalen des Oberbegriffs von Patentanspruch 1. Unter zylinderindividuellen Luftsteuereinrichtungen sind Einzeldrosselklappen und/oder zylinderindividuelle Lufteinlaßventile zu verstehen. Ein Beispiel ist aus DE 4 408 880 A bekannt.

Es ist üblich, die durch Montage- und Fertigungstoleranzen sowie Alterungseinflüsse bedingten Unterschiede der Luftfüllmengen der einzelnen Zylinder einer derartigen Brennkraftmaschine einmalig vor der (Wieder-)Inbetriebnahme z.B. bei der Fertigung oder in einer Werkstatte zu korrigieren. Dabei werden z.B. die Leerlaufstellungen der als Einzeldrosselklappen ausgebildeten zylinderindividuellen Luftsteuereinrichtungen durch eine Veränderung des Leerlaufanschlags korrigiert. Diese Verfahren sind aufwendig und berücksichtigen Änderungen, die sich im Betrieb z.B. durch eine zunehmende Verschmutzung der zylinderindividuellen Luftsteuereinrichtungen ergeben, nicht.

Der Erfindung liegt die Aufgabe zugrunde, ein Verfahren der eingangs genannten Art zu schaffen, bei dem ein irgendwie vorausgehender manueller Eingriff zur Kompensation des Einflusses unterschiedlicher Luftfüllmengen entfällt.

Die Erfindung löst diese Aufgabe durch die Merkmale des Patentanspruchs 1.

Durch die Erfindung wird die mechanische Toleranz nicht durch einen mechanischen Eingriff, sondern durch eine Veränderung der Einspritzmenge zumindest eines Zylinders korrigiert. Ausgehend von einer Bestimmung der Segmentzeit der Zylinder wird vorzugsweise der Zylinder mit der maximal abweichenden Segmentzeit durch Änderung der Einspritzmenge angepaßt. Ziel ist es dabei, die Segmentzeit des Zylinders an die der anderen Zylinder anzupassen.

Diese Anpassung erfolgt einmalig während einer Betriebsphase des Motors zu Beginn dieser Phase oder in regelmäßigen zeitlichen Abständen z.B. von Tagen. Das Ergebnis dieser Anpassung wird bleibend gespeichert Bei jedem Leerlaufzustand der Brennkraftmaschine wird die Einspritzmenge der von den erfindungsgemäßen Korrekturmaßnahmen betroffenen Zylinder entsprechend gegenüber dem Ursprungszustand mit für alle Zylinder gleicher Einspritzmenge verändert.

Die Bestimmung der Segmentzeit ist als solche zur Bestimmung der Drehzahl, Kurbelwellen- und Nockenwellenstellung einer Brennkraftmaschine bekannt. Sie wird vorzugsweise im Rahmen der Aussetzerkennung verwendet. Neu im Rahmen der vorliegenden Erfindung ist es, über die Messung der Segmentzeiten eine Aussage über die Luftfüllmengen der Zylinder zu gewinnen und anhand der Änderungen der Segmentzeiten der Zylinder die Auswirkungen der Einspritzmengenkorrekturen zu verfolgen.

Da jede Änderung der Einspritzmenge mit einer Änderung der Gemischzusammensetzung und damit der Abgaswerte verbunden ist, kann das erfindungsgemäße Verfahren verbessert werden, indem die Veränderung der Einspritzmenge eines Zylinders mit einer entsprechenden gegenläufigen Veränderung der Einspritzmenge der anderen Zylinder verbunden ist. Dadurch können trotz der Verbesserung der Laufruhe der Brennkraftmaschine die erforderlichen Abgaswerte eingehalten werden.

Da beim erfindungsgemäßen Verfahren vorzugsweise der Zylinder mit dem größten Segmentzeitunterschied angeglichen werden soll, kann der Zylinder mit der kleinsten oder der Zylinder mit der größten Segmentzeit ausgewählt werden. Vorteilhaft ist es dabei, den Zylinder mit der größten Segmentzeit, d. h. den "langsamsten" Zylinder auszuwählen. Die diesem mehr zugeführte Kraftstoffmenge läßt sich unter der Bedingung gleichbleibender Abgaswerte durch eine entsprechende Verringerung der Einspritzmenge mindestens eines anderen Zylinders auf regelungstechnisch einfache Weise korrigieren. Die Verringerung der Einspritzmenge wird dabei bei dem Zylinder durchgeführt, der die kleinste Segmentzeit besitzt, d. h. der "schnellste" Zylinder ist.

Das erfindungsgemäße Verfahren ist nicht auf den in seiner Segmentzeit am stärksten vom Durchschnitt abweichenden Zylinder beschränkt. Vielmehr können sämtliche Zylinder, die beispielsweise außerhalb eines vorgegebenen Toleranzbandes liegen, in ihrer Segmentzeit so angepaßt werden, daß sie sich innerhalb des Toleranzbandes befinden. Entsprechend wird die Veränderung der Einspritzmenge, die für diese Segmentzeitanpassung vorgenommen wird, durch eine entsprechende gegenläufige Änderung der Einspritzmenge (eines) der anderen Zylinder korrigiert.

In der Regel ist es nicht ausreichend, die Einspritzmengen des einen Zylinders nur einmalig zu korrigieren. Vielmehr handelt es sich um einen Regelungsvorgang, der in Form von mehreren aufeinanderfolgenden Schntten abläuft und bei denen ein oder mehrere Zylinder nacheinander oder gleichzeitig in ihrer Einspritzmenge vergrößert und gleichzeitig andere bzw. die anderen Zylinder in ihrer Einspritzmenge verkleinert werden. Ziel ist es dabei, durch die Änderung der Einspritzmengen die Laufunruhe möglichst zu verringern und gleichzeitig die Abgaswerte über sämtliche Zylinder nicht zu verändern. Bei einer Brennkraftmaschine, bei der die Zylinder bankweise angeordnet und gesteuert bzw geregelt werden, kann es vorteilhaft sein, die erfindungsgemäße Kompensation bankselektiv, d. h. für jede Zylinderbank individuell vorzunehmen. Dadurch läßt sich der Regelungsaufwand deutlich verringern.

Als Ergebnis des erfindungsgemäßen Verfahrens ergibt sich eine Brennkraftmaschine mit hoher Laufruhe bei weiterhin bestehenden unterschiedlichen Luftfüllmengen der einzelnen Zylinder.

## Patentansprüche

1. Verfahren zur Kompensation des Einflusses unterschiedlicher Luftfüllmengen bei einer sich im Leerlauf befindlichen Brennkraftmaschine mit mehreren zylinderindividuellen Luftsteuereinrichtungen, **dadurch gekennzeichnet, daß** die Segmentzeiten der Zylinder der Brennkraftmaschine bestimmt werden und daß zumindest die Segmentzeit des Zylinders, die die größte Abweichung von der durchschnittlichen Segmentzeit der Zylinder besitzt, durch eine Änderung der Einspritzmenge im Sinne einer Verkleinerung der Abweichung angepaßt wird.

2. Verfahren nach Anspruch 1, **dadurch gekennzeichnet, daß** die Einspritzmenge(n) der anderen Zylinder im entgegengesetzten Sinne verändert wird (werden).

3. Verfahren nach Anspruch 1 oder 2, **dadurch gekennzeichnet, daß** der Zylinder mit der größten Segmentzeit mit einer entsprechend größeren Kraftstoffmenge versorgt wird.

4. Verfahren nach Anspruch 1 bis 3, **dadurch gekennzeichnet, daß** bei einer Brennkraftmaschine mit mehreren Zylinderbänken die Kompensation bankselektiv durchgeführt wird.

## Claims

1. A method of compensating the influence of different amounts of air filling in the case of an idling internal combustion engine with a number of individual cylinder air control devices, **characterised in that** the segment times of the engine cylinders are determined and at least the segment time of the cylinder deviating furthest from the average cylinder segment time is adjusted by altering the amount injected so as to reduce the deviation.

2. A method according to claim 1, **characterised in that** the amount or amounts injected into the other cylinders are altered in the opposite direction.

3. A method according to claim 1 or 2, **characterised in that** the cylinder with the longest segment time is supplied with a correspondingly larger amount of fuel.

4. A method according to claims 1 to 3, **characterised in that** in the case of an engine with a number of rows of cylinders, the compensation is made selectively for each row.

## Revendications

1. Procédé de compensation de l'effet d'écart de quantités d'air de remplissage dans le cas d'un moteur à combustion interne en marche à vide avec plusieurs commandes d'air individuelles par cylindre,
**caractérisé en ce qu'**
on détermine les temps sectoriels des cylindres du moteur à combustion interne et au moins le temps sectoriel du cylindre qui présente l'écart le plus important par rapport au temps sectoriel moyen des cylindres est adapté par une modification de la quantité d'injection dans le sens d'une réduction de l'écart.

2. Procédé selon la revendication 1,
**caractérisé en ce que**
la/les quantité(s) d'injection des autres cylindres est/sont modifiée(s) dans le sens contraire.

3. Procédé selon la revendication 1 ou 2,
**caractérisé en ce que**
le cylindre présentant le temps sectoriel le plus important est alimenté par une quantité de carburant proportionnellement plus élevée.

4. Procédé selon la revendication 1 à 3,
**caractérisé en ce que**
la compensation se produit par banc spécifique dans le cas d'un moteur à combustion interne comportant plusieurs bancs de cylindres.
